# EUROPÄISCHE PATENTSCHRIFT

(11) **EP 4 412 492 B1**
(45) Veröffentlichungstag und Bekanntmachung des Hinweises auf die Patenterteilung: **04.03.2026**
(21) Anmeldenummer: 22797719.6
(22) Anmeldetag: 28.09.2022
(51) Int. Cl.: A47B 96/00, F16B 12/22

(54) **TABLARBESCHLAG UND ZUGEHÖRIGE MÖBELANORDNUNG**
SHELF CONNECTION AND RELATED FURNITURE
CONNECTEUR POUR ÉTAGÈRE ET MEUBLE ASSOCIÉ

(30) Priorität: 06.10.2021 DE 202021105403 U
(43) Veröffentlichungstag der Anmeldung: 14.08.2024
(73) Patentinhaber: Häfele Berlin GmbH & Co KG, 12307 Berlin (DE)
(72) Erfinder: BIRKNER, Robert, 12524 Berlin (DE); SAWATZKI, Gerd, 45711 Datteln (DE)
(74) Vertreter: Kohler Schmid Möbus Patentanwälte
(86) Internationale Anmeldenummer: PCT/EP2022/077056
(87) Internationale Veröffentlichungsnummer: WO 2023/057290

(56) Entgegenhaltungen:
- EP-A1- 2 609 833
- EP-A1- 3 281 555
- WO-A1-2015/158622
- WO-A1-2021/019455

## Beschreibung

Die Erfindung betrifft einen Beschlag, insbesondere Tablarbeschlag, zum Verbinden zweier Teile, insbesondere zweier Möbelteile wie z.B. eines Tablars an einer Seitenwand, aufweisend ein erstes Beschlagteil mit einem ersten Montagekörper zur Montage an einem zu verbindenden ersten Teil und mit einem im ersten Montagekörper verschiebbar geführten Schieber, der aus einer vorderen Ausgangsstellung, in welcher mindestens ein einen Hinterschnitt aufweisendes, vorderes Schieberende nach vorne aus dem ersten Montagekörper vorsteht, gegen die Wirkung einer Rückstellkraft nach hinten bis in eine hintere Endstellung, in welcher das vordere Schieberende nicht aus dem ersten Montagekörper vorsteht, verschiebbar ist, und ein zweites Beschlagteil in Form eines zweiten Montagekörpers zur Montage an einem zu verbindenden zweiten Teil, wobei der zweite Montagekörper ein Schlüsselloch mit einer Einführöffnung zum Einführen des vorderen Schieberendes und mit einer sich an die Einführöffnung anschließenden, gegenüber der Einführöffnung verengten Schlitzöffnung zum Hintergreifen des Hinterschnitts des vorderen Schieberendes aufweist. Die Erfindung betrifft auch eine zugehörige Anordnung mit zwei Teilen, die mittels des Beschlags miteinander verbunden sind.

Solche Beschläge sind hinreichend bekannt.

Aus WO 2015/158622 A1 ist ein zweiteiliger Tablarbeschlag bekannt. In einem Beschlaggehäuse eines ersten Beschlagteils ist ein Schieber mittels eines Exzenters aus einer vorderen Position gegen die Wirkung einer Feder in eine hintere Position verschiebbar. Der Exzenter ist im Beschlaggehäuse drehbar gelagert und wirkt mit einem Absatz des Schiebers zusammen, um den Schieber in die hintere Position zu verschieben. Das erste Beschlagteil hintergreift mit einem vorderen Schieberende ein Schlüsselloch eines zweiten Beschlagteils, wodurch die beiden Beschlagteile aneinander befestigt sind.

Ein ähnlicher zweiteiliger Tablarbeschlag ist auch aus EP 3 281 555 A1 bekannt. In einem Beschlaggehäuse eines ersten Beschlagteils ist ein Schieber aus einer vorderen Position gegen die Wirkung einer Feder in eine hintere Position verschiebbar. Das erste Beschlagteil hintergreift mit einem vorderen Schieberkopf ein Schlüsselloch eines zweiten Beschlagteils, wodurch die beiden Beschlagteile aneinander befestigt sind. Das zweite Beschlagteil hat eine Schrägfläche, an der der Schieberkopf mittels einer Querverschiebung aus dem Schlüsselloch herausgeführt werden kann.

Aus WO 2021/019455 A1 ist ferner ein Tablarbeschlag mit einem Beschlaggehäuse bekannt, in dem ein Schieber mittels einer Zahnstange und eines Zahnrads aus einer vorderen Position gegen die Wirkung einer Feder in eine hintere Position verschiebbar ist. Zu diesem Zweck kämmt die am Schieber ausgebildete Zahnstange mit dem im Beschlaggehäuse drehbar gelagerten Zahnrad.

Demgegenüber liegt der vorliegenden Erfindung die Aufgabe zugrunde, einen möglichst einfach aufgebauten Beschlag zum Verbinden zweier Teile anzugeben.

Diese Aufgabe wird erfindungsgemäß durch einen Beschlag mit den Merkmalen von Anspruch 1 gelöst.

Erfindungsgemäß weist der Schieber mindestens zwei parallele, jeweils einen Hinterschnitt aufweisende, vordere Schieberenden auf, die mit entsprechenden Schlüsselllöchern des zweiten Beschlagteils zusammenwirken.

Vorzugsweise sind die mindestens zwei vorderen Schieberenden stiftförmig ausgebildet.

Der erfindungsgemäße Beschlag ermöglicht eine werkzeuglose Montage an den beiden Teilen, wobei der montierte Beschlag nahezu unsichtbar ist. Über Zahnrad und Zahnstange kann der Schieber in der ersten Erfindungsvariante von außen gegen die Wirkung der Rückstellkraft in die hintere Endstellung geschoben werden. In der zweiten Erfindungsvariante kann der Schieber über den schrägen Öffnungsboden gegen die Wirkung der Rückstellkraft in die hintere Endstellung geschoben werden.

Die Rückstellkraft ist bevorzugt durch eine Feder, insbesondere Druckfeder, gegeben, die sowohl am ersten Montagekörper als auch am Schieber abgestützt ist.

Besonders bevorzugt ist der Schieber in der hinteren Endposition mit dem ersten Montagekörper verrastet. Bei der Demontage eines Tablars mit mehreren solchen Beschlägen können so zunächst alle Beschläge in ihre hintere Endposition überführt werden, und anschließend das Tablar entfernt werden.

Vorzugsweise weist der erste Montagekörper in der ersten Erfindungsvariante eine Zugangsöffnung zum Verdrehen des Zahnrads auf. In der zweiten Erfindungsvariante entspricht die Tiefe des schrägen Öffnungsbodens an der Einführöffnung mindestens der Summe des Abstands der Stirnseite zum Hinterschnitt des vorderen Schieberendes und der Dicke der die Schlitzöffnung definierenden Öffnungswand des zweiten Montagekörpers.

Das zweite Beschlagteil kann vorteilhaft entlang der Schlitzöffnung eine schräg nach hinten laufende Anzugskontur für den Hinterschnitt des vorderen Schieberendes aufweisen, um das erste und das zweite Beschlagteil in gegenseitige Anlage heranzuziehen.

Besonders bevorzugt ist der erste Montagekörper aus zwei insbesondere baugleichen Gehäusehälften gebildet, die jeweils innenseitig eine Führungsaussparung für den Schieber aufweisen. Dabei kann zumindest eine der beiden Gehäusehälften, insbesondere beide Gehäusehälften, jeweils eine Lageröffnung aufweisen, in der das Zahnrad drehbar gelagert und von außen für eine Drehbetätigung zugänglich ist.

Vorzugsweise weisen der erste Montagekörper und der zweite Montagekörper außenseitige Vorsprünge und/oder außenseitige Querrippen auf, um die Montagekörper in entsprechenden Bohrungen von Möbelteilen zu verankern.

Die Erfindung betrifft auch eine Anordnung, insbesondere Möbelanordnung, mit zwei Teilen und mit einem wie oben ausgebildeten Beschlag, wobei das erste Beschlagteil an dem einen, ersten Teil und das zweite Beschlagteil an dem anderen, zweiten Teil montiert sind und wobei die mindestens zwei vorderen Schieberenden in die entsprechenden Schlüssellöcher eingeführt sind und mit ihren Hinterschnitten die Schlitzöffnungen in Einführrichtung hintergreifen. Lediglich eine Bohrung im Tablar zum Zurückstellen des Schiebers, nachdem dieser zunächst aus der Schlüssellochhinterschneidung verschoben wurde, zurück in die hintere Endstellung und somit zum Lösen der Verbindung ist zu sehen.

Vorzugsweise sind das erste Beschlagteil mit seinem ersten Montagekörper in einer Aussparung, insbesondere Langlochbohrung oder -fräsung, des ersten Teils und das zweite Beschlagteil mit seinem zweiten Montagekörper in einer Aussparung, insbesondere Langlochbohrung oder -fräsung, des zweiten Teils montiert. Die Vorderseiten der beiden Montagekörper schließen vorteilhaft jeweils bündig mit den beiden Teilen ab und liegen aneinander an.

Weitere Vorteile der Erfindung ergeben sich aus der Beschreibung, den Ansprüchen und der Zeichnung. Ebenso können die vorstehenden genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: die beiden Beschlagteile des erfindungsgemäßen Beschlags in einer perspektivischen Ansicht (Fig. 1a) und in einer Ansicht bei abgenommener oberer Gehäusehälfte des einen, ersten Beschlagteils (Fig. 1b);
- Fig. 2: eine Explosionsansicht des ersten Beschlagteils ohne die obere Gehäusehälfte;
- Fig. 3: eine Frontansicht des anderen, zweiten Beschlagteils;
- Fign. 4a-4c: die Funktionsweise des erfindungsgemäßen Beschlags;
- Fig. 5: zwei mittels des erfindungsgemäßen Beschlags miteinander zu verbindende Möbelteile;
- Fign. 6a-6d: die Montageschritte zum Verbinden der beiden in Fig. 5 gezeigten Möbelteile mittels des erfindungsgemäßen Beschlags;
- Fig. 7: eine Frontansicht eines modifizierten zweiten Beschlagteils;
- Fig. 8: die beiden Beschlagteile einer zweiten Ausführungsform des erfindungsgemäßen Beschlags in einer perspektivischen Ansicht;
- Fig. 9: eine zweite Ausführungsform eines aus zwei Beschlagteilen gebildeten, erfindungsgemäßen Beschlags;
- Fign. 10a, 10b: das eine, erste Beschlagteil der zweiten Ausführungsform in einer perspektivischen Ansicht (Fig. 10a) bei abgenommener, oberer Gehäusehälfte und in einer Explosionsansicht (Fig. 10b);
- Fign. 11a, 11b: das andere, zweite Beschlagteil der zweiten Ausführungsform in einem Längsschnitt (Fig. 11a) und in einer Frontansicht (Fig. 11b);
- Fign. 12a-12e: die Funktionsweise des erfindungsgemäßen Beschlags der zweiten Ausführungsform, jeweils in einem Längsschnitt; und
- Fign. 13a-13e: die Montageschritte zum Verbinden zweier Möbelteile mittels des erfindungsgemäßen Beschlags der zweiten Ausführungsform.

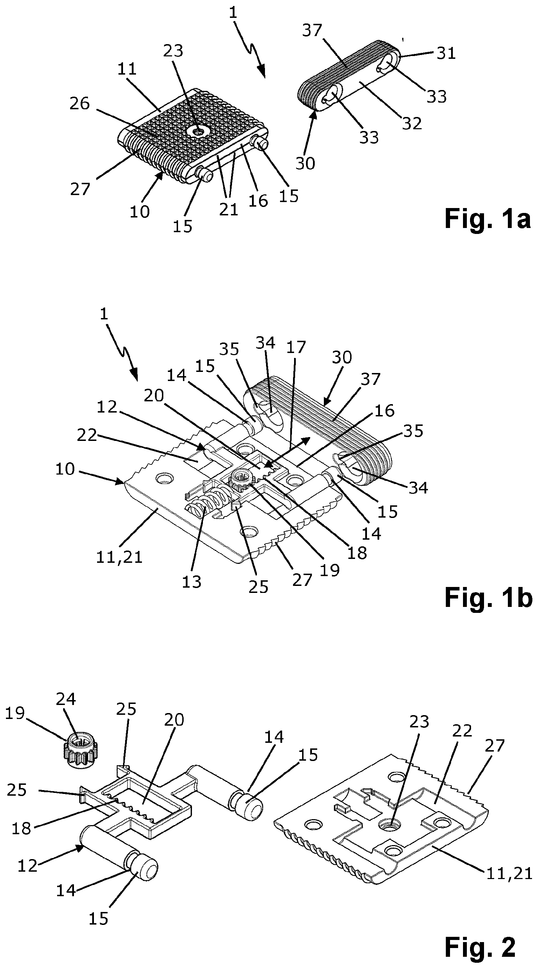

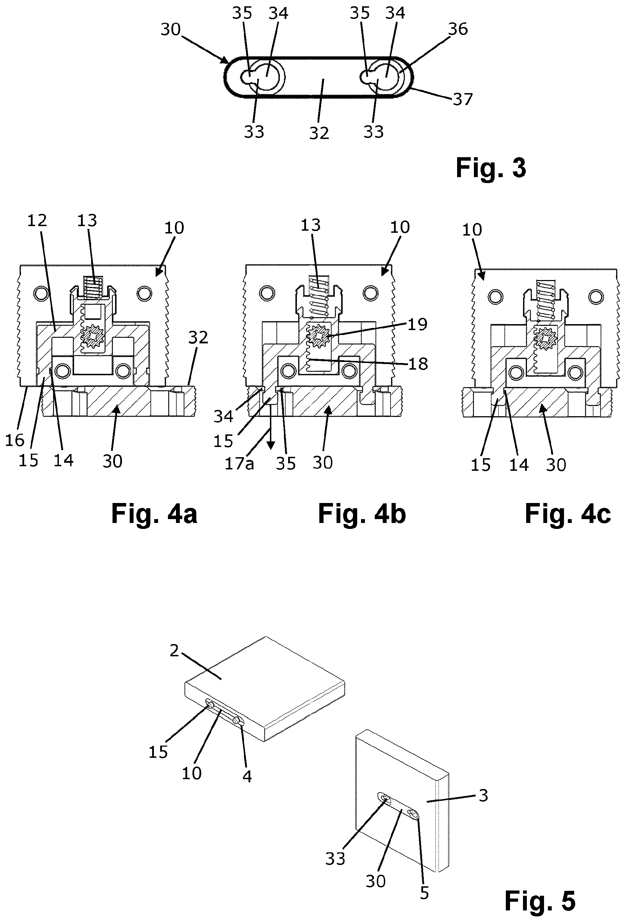

Der in **Fign. 1a, 1b** gezeigte (Tablar)Beschlag **1** dient zum Verbinden zweier Möbelteile, hier eines Tablars **2** an einer Seitenwand **3** (Fig. 5), und weist zwei Beschlagteile **10**, **30** auf.

Wie in **Fig. 2** gezeigt, weist das erste Beschlagteil 10 einen ersten Montagekörper (Tablargehäuse) **11**, einen darin gradlinig verschiebbar geführten Schieber **12** und eine Druckfeder **13** (Fig. 1b) auf, die einenends am ersten Montagekörper 11 und anderenends am Schieber 12 abgestützt ist. Der Schieber 12 ist aus einer in Fign. 1a, 1b gezeigten, vorderen Ausgangsstellung, in welcher zwei jeweils einen Hinterschnitt **14** aufweisende, hier stiftförmige, vordere Schieberenden **15** nach vorne aus dem Montagekörper 11 vorstehen, gegen die Wirkung der Druckfeder 13 nach hinten bis in eine hintere Endstellung verschiebbar, in welcher die vorderen Schieberenden 15 nicht mehr aus dem Montagekörper 11 vorstehen, sondern bündig mit einer Vorderseite **16** des ersten Montagekörpers 11 abschließen. Der Hinterschnitt 14 kann ein Absatz des vorderen Schieberendes 15 sein und, wie gezeigt, beispielsweise durch eine Ringnut gebildet sein.

Der Schieber 12 hat eine sich in seiner Schieberichtung **17** ersteckende Zahnstange **18**, mit der ein im ersten Montagekörper 11 drehbar gelagertes Zahnrad **19** kämmt. Das Zahnrad 19 ist von außen manuell verdrehbar, um den Schieber 12 gegen die Wirkung der Druckfeder 13 in die hintere Endstellung zu verschieben. Das Zahnrad 19 kann beispielsweise, wie auch im Ausführungsbeispiel gezeigt, in einer Rechtecköffnung **20** des Schiebers 12 angeordnet sein, deren eine Seitenwand als Zahnstange 18 ausgebildet ist und deren gegenüberliegende, glatte Seitenwand am Zahnrad 19 anliegt und daran gleiten kann. Alternativ kann die gegenüberliegende Seitenwand am Zahnrad 19 auch nicht anliegen und somit nicht daran gleiten; in diesem Fall kann der Schieber 12 auch in einer nicht-rechteckigen Öffnung angeordnet sein.

Vorzugsweise ist der erste Montagekörper 11 aus zwei baugleichen Gehäusehälften **21** mit jeweils innenseitigen Führungsaussparungen **22** für den dazwischen angeordneten Schieber 12 zusammengesetzt. Die beiden Gehäusehälften 21 weisen jeweils eine nach innen und nach außen offene Lager- bzw. Zugangsöffnung **23** auf, in der das Zahnrad 19 drehbar gelagert ist und durch die hindurch ein Werkzeug von außen eingeführt werden kann, um in einen Schlitz **24**, hier Kreuzschlitz, oder alternativ in einen Innensechskant oder Torx des Zahnrads 19 einzugreifen. Der Schieber 12 ist in den Führungsaussparungen 22 verschiebbar geführt, wobei zwei seitliche Rastnasen **25** am hinteren Schieberende das Herausschieben des Schiebers 12 aus dem ersten Montagekörper 11 verhindern (in dieser Position sind die vorderen Schieberenden 15 im ersten Montagekörper 11 zurückgesetzt). Die in Fig. 1a gezeigten Ober- und Unterseiten des ersten Montagekörpers 11 können optional mit spitzen, hier pyramidenförmigen Vorsprüngen **26** (oder Querrippen) strukturiert sein, und die beiden Schmalseiten des ersten Montagekörpers 11 können außenseitige Querrippen **27** aufweisen.

Das zweite Beschlagteil 30 ist ein zweiter Montagekörper (Muffe) **31** mit einer Vorderseite **32,** die zwei in Breitenrichtung der Vorderseite 32 beabstandete Schlüssellöcher 33 aufweist. Wie in **Fig.** 3 gezeigt, haben diese Schlüssellöcher 33 jeweils eine hier runde Einführöffnung **34** zum Einführen des vorderen Schieberendes 15 und eine sich in Breitenrichtung, hier links, an die Einführöffnung 34 anschließende, gegenüber der Einführöffnung 34 verengte Schlitzöffnung **35** zum Hintergreifen des Hinterschnitts 14 des vorderen Schieberendes 15. Eine Fase **36** an der Einführöffnung 34 erleichtert das Einführen des vorderen Schieberendes 15. Der zweite Montagekörper 31 weist optional außenseitige Querrippen **37** auf.

In **Fign. 4a-4c** ist die Funktionsweise des Tablarbeschlags 1 gezeigt.

In Fig. 4a liegen die beiden Beschlagteile 10, 30 mit ihren Vorderseiten 16, 32 aneinander an, wodurch die vorderen Schieberenden 15 von der Vorderseite 32 gegen die Wirkung der Druckfeder 13 in ihre hintere Stellung zurückgeschoben sind. In Fig. 4b ist das erste Beschlagteil 10 gegenüber dem zweiten Beschlagteil 30 nach rechts querverschoben, bis die vorderen Schieberenden 15, angetrieben von der Druckfeder 13, in Einführrichtung **17a** in die Einführöffnungen 34 eingetreten sind. Dabei wird das Zahnrad 19 von der Zahnstange 18 entgegen dem Uhrzeigersinn gedreht.

In Fig. 4c ist das erste Beschlagteil 10 gegenüber dem zweiten Beschlagteil 30 noch weiter nach rechts querverschoben, bis die eingeführten vorderen Schieberenden 15 jeweils mit ihrem Hinterschnitt 14 in die Schlitzöffnung 35 eingetreten sind und die Schlitzöffnung 35 in Einführrichtung 17a hintergreifen. Dadurch ist das erste Beschlagteil 10 am zweiten Beschlagteil 30 entgegen der Einführrichtung 17a verriegelt.

Wie in **Fig. 5** gezeigt, werden das erste Beschlagteil 10 mit seinem ersten Montagekörper 11 in einer waagerechten stirnseitigen Aussparung (z.B. Langlochbohrung oder -fräsung) **4** des Tablars 2 und das zweite Beschlagteil 30 mit seinem zweiten Montagekörper 31 in einer waagerechten Aussparung (z.B. Langlochbohrung oder -fräsung) **5** der Seitenwand 3 montiert. Vorzugsweise schließen dabei die Vorderseite 16 des ersten Montagekörpers 11 bündig mit dem Tablar 2 und die Vorderseite 32 des zweiten Montagekörpers 21 bündig mit der Seitenwand 3 ab.

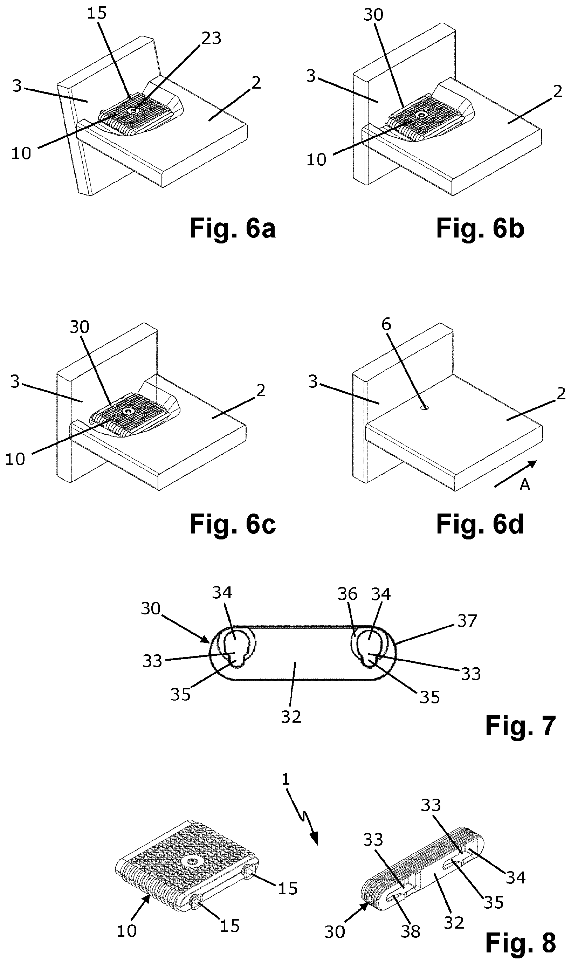

In **Fign. 6a-6d** sind die einzelnen Montageschritte zum Verbinden des Tablars 2 an der Seitenwand 3 mittels des Tablarbeschlags 1 gezeigt.

Das Tablar 2 wird zwischen zwei vertikalen Seitenwänden 3 zunächst gekippt eingefügt (Fig. 6a) und dann in die horizontale Lage ausgerichtet, wodurch die vorderen Schieberenden 15 von der Seitenwand 3 gegen die Wirkung der Druckfeder 13 in ihre hintere Stellung zurückgeschoben werden (Fig. 6b). Das Tablar 2 wird in vertikaler und in Tiefenrichtung querverschoben, bis die vorderen Schieberenden 15, angetrieben von der Druckfeder 13, in die Einführöffnungen 34 eintauchen (Fig. 6c). Das Tablar 2 wird gegenüber der Seitenwand 3 weiter nach hinten gedrückt (Pfeilrichtung **A**), bis die vorderen Schieberenden 15 jeweils mit ihrem Hinterschnitt 14 in die Schlitzöffnung 35 eingetreten sind und die Schlitzöffnung 35 in Einführrichtung 17a hintergreifen (Fig. 6d). Eine schräg nach hinten laufende Anzugskontur **38** (Fig. 8) an der Vorderseite 32 bewirkt, dass die vorderen Schieberenden 15 und damit auch das erste Beschlagteil 10 in Anlage an das zweite Beschlagteil 30 herangezogen werden. Eine nicht gezeigte Engstelle in der Schlitzöffnung 35 sorgt für ein merkliches Feedback beim Erreichen der Endlage und sorgt für eine Endlagenfixierung.

Der Tablarbeschlag 1 ermöglicht eine werkzeuglose Montage, wobei der montierte Tablarbeschlag 1 nahezu unsichtbar ist. Lediglich eine Bohrung **6** im Tablar 2 zum Lösen der Verbindung ist zu sehen.

Der Demontagevorgang verläuft entsprechend rückwärts zum beschriebenen Montagevorgang ab. Das Tablar 2 wird nach vorne gezogen, bis die vorderen Schieberenden 15 wieder in den Einführöffnungen 34 liegen. Ein Werkzeug, z.B. ein Schraubendreher, wird durch die Öffnung 6 im Tablar 2 und durch die Zugangsöffnung 23 des ersten Beschlagteils 10 eingeführt und das Zahnrad 19, in der Ansicht der Fign. 4a-4c, im Uhrzeigersinn gedreht. Dadurch wird der Schieber 12 nach hinten in eine hintere Stellung geschoben und dort mittels der Rastnasen 25 mit dem ersten Montagekörper 11 verrastet. Dieser Vorgang wird bei allen vorhandenen Tablarbeschlägen 1 wiederholt, woraufhin das Tablar 2 entfernt werden kann.

Von Fig. 3 unterscheidet sich das in **Fig. 7** gezeigte, zweite Beschlagteil 30 lediglich dadurch, dass hier die Schlitzöffnung 35 sich in Höhenrichtung, hier nach oben, an die Einführöffnung 34 anschließt. Bei der Montage wird das Tablar 2 nach unten querverschoben, um das erste Beschlagteil 10 am zweiten Beschlagteil 30 zu verriegeln.

Von Fig. 1 unterscheidet sich der in **Fig. 8** gezeigte Tablarbeschlag 1 lediglich dadurch, dass hier die vorderen Schieberenden 15 eine rechteckige oder quadratische Außenkontur aufweisen. Alternativ ist auch eine andere polygone oder ovale (elliptische) Außenkontur möglich. Die Öffnungskontur der Einführöffnung 34 ist entsprechend an die Außenkontur der vorderen Schieberenden 15 angepasst.

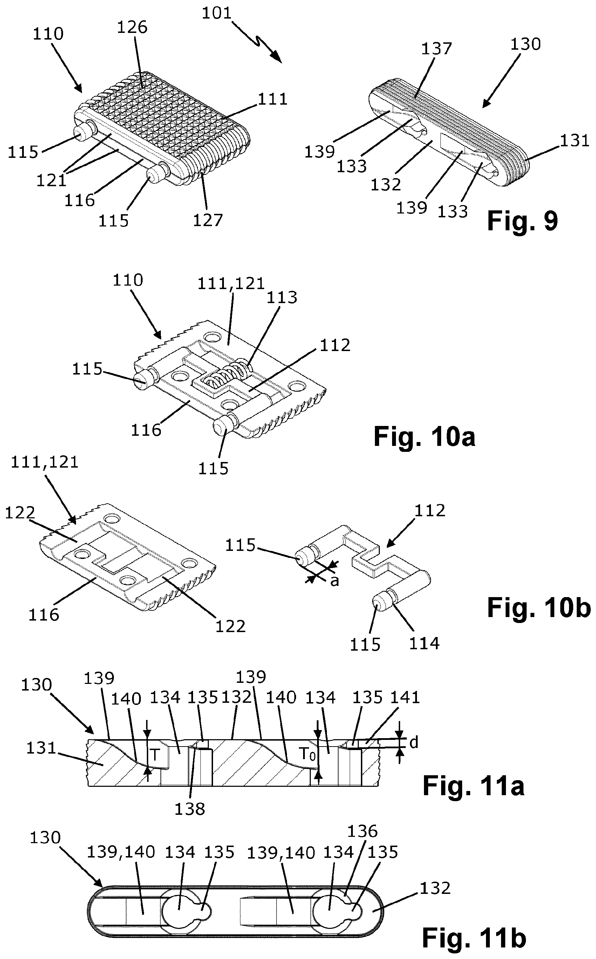

Vom Tablarbeschlag 1 der Fign. 1-3 unterscheidet sich der in **Fign. 9-11** gezeigte Tablarbeschlag **101** dadurch, dass beim ersten Beschlagteil **110** der erste Montagekörper **111** kein Zahnrad und keine Zugangsöffnung und der Schieber **112** keine Zahnstange aufweisen und dass beim zweiten Beschlagteil **130** die Vorderseite **132** des zweiten Montagekörpers **131** jeweils eine Zusatzöffnung **139** aufweist, die auf der der Schlitzöffnung **135** abgewandten Seite des Schlüssellochs **133** in die Einführöffnung **134** mündet. Die Zusatzöffnung 139 hat einen schrägen Öffnungsboden **140,** dessen auf die Vorderseite 132 bezogene Tiefe **T**, gesehen in Richtung fort von der Einführöffnung 134, kontinuierlich bis auf das Niveau der Vorderseite 132 abnimmt. Die Tiefe **T₀** an der Einführöffnung 134 entspricht mindestens einer Eintauchtiefe des vorderen Schieberendes 115, welche durch die Summe des Abstands **a** der Stirnseite zum Hinterschnitt **114** des vorderen Schieberendes 115 und der Dicke **d** der die Schlitzöffnung 135 definierenden Öffnungswand **141** des zweiten Montagekörpers 131 definiert ist, also T₀ ≥ a+d.

Das zweite Beschlagteil 130 weist optional entlang der Schlitzöffnung 135 eine schräg nach hinten laufende Anzugskontur **138** für den Hinterschnitt 114 des vorderen Schieberendes 115 auf, um das erste und das zweite Beschlagteil 110, 130 in gegenseitige Anlage heranzuziehen. Der erste Montagekörper 111 kann optional aus zwei insbesondere baugleichen Gehäusehälften **121** gebildet sein, die jeweils innenseitig eine Führungsaussparung **122** für den Schieber 112 aufweisen. Weiter optional kann der erste Montagekörper 111 außenseitige Vorsprünge **126** und außenseitige Querrippen **127** und der zweite Montagekörper 131 außenseitige Querrippen **137** aufweisen.

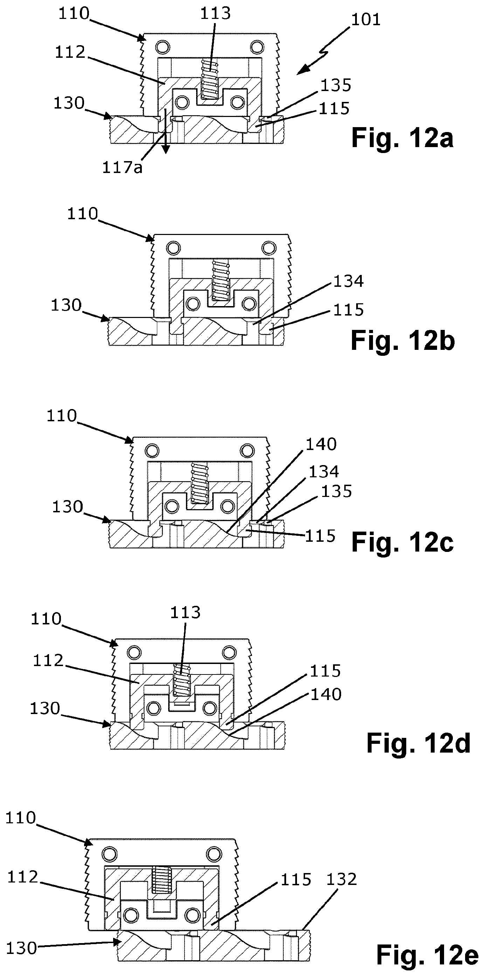

In **Fign. 12a-12e** ist die Funktionsweise des Tablarbeschlags 101 gezeigt.

In Fig. 12a liegen die beiden Beschlagteile 110, 130 mit ihren Vorderseiten **116**, 132 aneinander an, und das erste Beschlagteil 110 ist gegenüber dem zweiten Beschlagteil 130 soweit querverschoben, bis die vorderen Schieberenden 115, angetrieben von der Druckfeder **113**, in die Einführöffnungen 134 in Einführrichtung **117a** eingetreten sind.

In Fig. 12b ist das erste Beschlagteil 110 gegenüber dem zweiten Beschlagteil 130 nach rechts querverschoben, bis die eingeführten vorderen Schieberenden 115 jeweils mit ihrem Hinterschnitt 114 in die Schlitzöffnung 135 eingetreten sind und die Öffnungswand 141 in Einführrichtung 117a hintergreifen. Dadurch ist das erste Beschlagteil 110 am zweiten Beschlagteil 130 entgegen der Einführrichtung 117a verriegelt.

Zur Demontage wird das erste Beschlagteil 110 gegenüber dem zweiten Beschlagteil 130 nach links querverschoben, bis die vorderen Schieberenden 115 aus der Schlitzöffnung 135 ausgetreten und über die Einführöffnungen 134 hinweg geschoben sind und auf den schrägen Öffnungsboden 140 treffen (Fig. 12c). Beim weiteren Querverschieben des ersten Beschlagteils 110 nach links werden die vorderen Schieberenden 115 dann an dem schrägen Öffnungsboden 140 - und damit auch der Schieber 112 - gegen die Kraft der Druckfeder 113 zurückgeschoben (Fig. 12d), bis sie schließlich in der hinteren Schieberposition an der Vorderseite 132 anliegen (Fig. 12e).

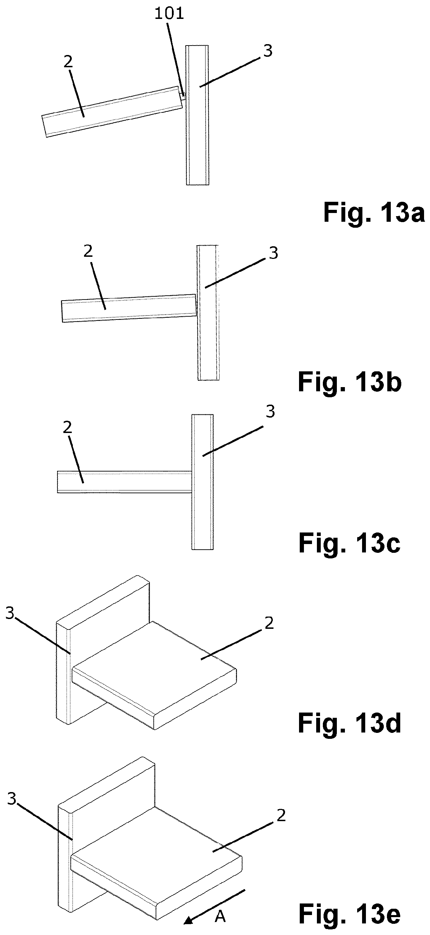

In **Fign. 13a-13e** sind die einzelnen Montageschritte zum Verbinden des Tablars 2 an der Seitenwand 3 mittels des Tablarbeschlags 101 gezeigt.

Das Tablar 2 wird zwischen zwei vertikalen Seitenwänden 3 zunächst gekippt eingefügt (Fig. 13a) und dann in die horizontale Lage ausgerichtet, wodurch die vorderen Schieberenden 115 von der Seitenwand 3 gegen die Wirkung der Druckfeder 113 in ihre hintere Stellung zurückgeschoben werden (Fig. 13b). Das Tablar 2 wird in vertikaler und in Tiefenrichtung querverschoben, bis die vorderen Schieberenden 115, angetrieben von der Druckfeder 113, in die Einführöffnungen 134 eintauchen (Fign. 13c, 13d). Das Tablar 2 wird gegenüber der Seitenwand 3 weiter nach hinten gedrückt (Pfeilrichtung A), bis die vorderen Schieberenden 115 jeweils mit ihrem Hinterschnitt 114 in die Schlitzöffnung 135 eingetreten sind und die Öffnungswand 141 in Einführrichtung 117a hintergreifen (Fig. 13e). Der Tablarbeschlag 101 ermöglicht eine werkzeuglose Montage und Demontage, wobei der montierte Tablarbeschlag 101 unsichtbar ist.

## Patentansprüche

1. Beschlag (1; 101), insbesondere Tablarbeschlag, zum Verbinden zweier Teile (2, 3), insbesondere zweier Möbelteile, aufweisend
- ein erstes Beschlagteil (10; 110) mit einem ersten Montagekörper (11; 111) zur Montage an einem zu verbindenden ersten Teil (2) und mit einem im ersten Montagekörper (11; 111) verschiebbar geführten Schieber (12; 112), der aus einer vorderen Ausgangsstellung, in welcher mindestens ein einen Hinterschnitt (14; 114) aufweisendes, vorderes Schieberende (15; 115) nach vorne aus dem ersten Montagekörper (11; 111) vorsteht, gegen die Wirkung einer Rückstellkraft nach hinten bis in eine hintere Endstellung, in welcher das vordere Schieberende (15; 115) nicht aus dem ersten Montagekörper (11; 111) vorsteht, verschiebbar ist, und
- ein zweites Beschlagteil (30; 130) in Form eines zweiten Montagekörpers (31; 131) zur Montage an einem zu verbindenden zweiten Teil (3), wobei der zweite Montagekörper (31; 131) ein Schlüsselloch (33; 133) mit einer Einführöffnung (34; 134) zum Einführen des vorderen Schieberendes (15; 115) und mit einer sich an die Einführöffnung (34; 134) anschließenden, gegenüber der Einführöffnung (34; 134) verengten Schlitzöffnung (35; 135) zum Hintergreifen des Hinterschnitts (14; 114) des vorderen Schieberendes (15; 115) aufweist,
wobei der Schieber (12) eine sich in Schieberichtung (17) des Schiebers (12) ersteckende Zahnstange (18) aufweist und im ersten Montagekörper (11) ein Zahnrad (19) drehbar gelagert ist, das mit der Zahnstange (18) kämmt und von außen manuell verdrehbar ist, um den Schieber (12) gegen die Wirkung der Rückstellkraft in die hintere Endstellung zu verschieben,
oder
wobei die Vorderseite (132) des zweiten Montagekörpers (131) auf der der Schlitzöffnung (135) abgewandten Seite des Schlüssellochs (133) eine in die Einführöffnung (134) mündende Zusatzöffnung (139) mit einem schrägen Öffnungsboden (140) aufweist, dessen auf die Vorderseite (132) bezogene Tiefe (T), gesehen in Richtung fort von der Einführöffnung (134), kontinuierlich bis auf das Niveau der Vorderseite (132) abnimmt, um den Schieber (112) gegen die Wirkung der Rückstellkraft in die hintere Endstellung zu verschieben,
**dadurch gekennzeichnet,**
**dass** der Schieber (12; 112) mindestens zwei parallele, jeweils einen Hinterschnitt (14; 114) aufweisende, vordere Schieberenden (15; 115) aufweist, die mit entsprechenden Schlüssellöchern (33; 133) des zweiten Beschlagteils (30; 130) zusammenwirken.

2. Beschlag nach Anspruch 1, **dadurch gekennzeichnet, dass** das Zahnrad (19) in einer insbesondere rechteckigen Öffnung (20) des Schiebers (12) angeordnet ist, deren eine Seitenwand die Zahnstange (18) aufweist.

3. Beschlag nach Anspruch 1 oder 2, **dadurch gekennzeichnet, dass** der erste Montagekörper (11) eine Zugangsöffnung (23) zum Verdrehen des Zahnrads (19) aufweist.

4. Beschlag nach Anspruch 1, **dadurch gekennzeichnet, dass** die Tiefe (T₀) des schrägen Öffnungsbodens (140) an der Einführöffnung (134) mindestens der Summe des Abstands (a) der Stirnseite zum jeweiligen Hinterschnitt (114) der mindestens zwei vorderen Schieberenden (115) und der Dicke (d) der die Schlitzöffnung (135) definierenden Öffnungswand (141) des zweiten Montagekörpers (131) entspricht.

5. Beschlag nach einem der vorhergehenden Ansprüche, **dadurch gekennzeichnet, dass** die Rückstellkraft durch eine Feder, insbesondere Druckfeder (13; 113), gegeben ist, die sowohl am ersten Montagekörper (11; 111) als auch am Schieber (12; 112) abgestützt ist.

6. Beschlag nach einem der vorhergehenden Ansprüche, **dadurch gekennzeichnet, dass** die mindestens zwei vorderen Schieberenden (15; 115) stiftförmig ausgebildet sind.

7. Beschlag nach einem der vorhergehenden Ansprüche, **dadurch gekennzeichnet, dass** der Schieber (12) in der hinteren Endposition mit dem ersten Montagekörper (11) verrastet ist.

8. Beschlag nach einem der vorhergehenden Ansprüche, **dadurch gekennzeichnet, dass** das zweite Beschlagteil (30; 130) entlang der Schlitzöffnung (35; 135) eine schräg nach hinten laufende Anzugskontur (38; 138) für den jeweiligen Hinterschnitt (14; 114) der mindestens zwei vorderen Schieberenden (15; 115) aufweist, um das erste und das zweite Beschlagteil (10, 30; 110, 130) in gegenseitige Anlage heranzuziehen.

9. Beschlag nach einem der vorhergehenden Ansprüche, **dadurch gekennzeichnet, dass** der erste Montagekörper (11; 111) aus zwei insbesondere baugleichen Gehäusehälften (21; 121) gebildet ist, die jeweils innenseitig eine Führungsaussparung (22; 122) für den Schieber (12; 112) aufweisen.

10. Beschlag nach Anspruch 9, **dadurch gekennzeichnet, dass** zumindest eine der beiden Gehäusehälften (21), insbesondere beide Gehäusehälften (21), jeweils eine Lageröffnung (23) aufweisen, in der das Zahnrad (19) drehbar gelagert ist.

11. Beschlag nach einem der vorhergehenden Ansprüche, **dadurch gekennzeichnet, dass** der erste Montagekörper (11; 111) außenseitige Vorsprünge (26; 126) und/oder außenseitige Querrippen (27; 127) aufweist und/oder dass der zweite Montagekörper (31; 131) außenseitige Querrippen (37; 137) aufweist.

12. Anordnung, insbesondere Möbelanordnung, mit zwei Teilen (2, 3) und mit einem Beschlag (1; 101) nach einem der vorhergehenden Ansprüche, wobei das erste Beschlagteil (10; 110) an dem einen, ersten Teil (2) und das zweite Beschlagteil (30; 130) an dem anderen, zweiten Teil (3) montiert sind und wobei die mindestens zwei vorderen Schieberenden (15; 115) in die entsprechenden Schlüssellöcher (33; 133) eingeführt sind und mit ihren Hinterschnitten (14; 114) die Schlitzöffnungen (35; 135) in Einführrichtung (17a; 117a) hintergreifen.

13. Anordnung nach Anspruch 12, **dadurch gekennzeichnet, dass** das erste Beschlagteil (10; 110) mit seinem ersten Montagekörper (11; 111) in einer Aussparung (4) des ersten Teils (2) und das zweite Beschlagteil (30; 130) mit seinem zweiten Montagekörper (31; 131) in einer Aussparung (5) des zweiten Teils (3) montiert sind.

14. Anordnung nach Anspruch 12 oder 13, **dadurch gekennzeichnet, dass** die Vorderseite (16; 116) des ersten Montagekörpers (11; 111) bündig mit dem ersten Teil (2) und die Vorderseite (32; 132) des zweiten Montagekörpers (31; 131) bündig mit dem zweiten Teil (3) abschließen.

15. Anordnung nach einem der Ansprüche 12 bis 14, **dadurch gekennzeichnet, dass** die Vorderseite (16; 116) des ersten Montagekörpers (11; 111) und die Vorderseite (32; 132) des zweiten Montagekörpers (31; 131) aneinander anliegen.

## Claims

1. A fitting (1; 101), in particular a shelf fitting, for connecting two parts (2, 3), in particular two furniture parts, comprising
- a first fitting part (10; 110) with a first installation body (11; 111) for mounting on a first part (2) to be connected, and with a slider (12; 112), which is movably guided in the first installation body (11; 111) and can be moved rearward against the action of a restoring force from a front starting position, in which at least one front slider end (15; 115) having an undercut (14; 114) protrudes out of the first installation body (11; 111) toward the front, into a rear end position, in which the front slider end (15; 115) does not protrude out of the first installation body (11; 111), and
- a second fitting part (30; 130) in the form of a second installation body (31; 131) for mounting on a second part (3) to be connected, wherein the second installation body (31; 131) has a keyhole (33; 133) with an insertion opening (34; 134) for inserting the front slider end (15; 115) and with a slotted opening (35; 135), which adjoins the insertion opening (34; 134) and which is constricted in comparison with the insertion opening (34; 134), for engaging behind the undercut (14; 114) of the front slider end (15; 115),
wherein the slider (12) has a gear rack (18), which extends in the sliding direction (17) of the slider (12), and a gear (19) is rotatably mounted in the first installation body (11) which meshes with the gear rack (18) and can be manually rotated from the outside in order to move the slider (12) into the rear end position against the action of the restoring force,
or
wherein the front side (132) of the second installation body (131) has, on the side of the keyhole (133) facing away from the slotted opening (135), an additional opening (139), which opens into the insertion opening (134) and has an oblique opening base (140), whose depth (T) in relation to the front side (132), when viewed in the direction away from the insertion opening (134), decreases continuously to the level of the front side (132) in order to move the slider (12) into the rear end position against the action of the restoring force,
**characterized in that**
the slider (12; 112) has at least two parallel front slider ends (15; 115), each having an undercut (14; 114) and cooperating with corresponding keyholes (33; 133) of the second fitting part (30; 130).

2. The fitting as claimed in claim 1, **characterized in that** the gear (19) is arranged in an opening (20), in particular a rectangular opening, of the slider (12), one side wall of which opening has the gear rack (18).

3. The fitting as claimed in claim 1 or 2, **characterized in that** the first installation body (11) has an access opening (23) for rotation of the gear (19).

4. The fitting as claimed in claim 1, **characterized in that** the depth (T₀) of the oblique opening base (140) at the insertion opening (134) corresponds at least to the sum of the distance (a) of the end face from the respective undercut (114) of the at least two front slider ends (115) and the thickness (d) of the opening wall (141), defining the slotted opening (135), of the second installation body (131).

5. The fitting as claimed in any of the preceding claims, **characterized in that** the restoring force is provided by a spring, in particular a compression spring (13; 113), which is supported both on the first installation body (11; 111) and on the slider (12; 112).

6. The fitting as claimed in any of the preceding claims, **characterized in that** the at least two front slider ends (15; 115) are of pin-shaped design.

7. The fitting as claimed in any of the preceding claims, **characterized in that** the slider (12) is latched to the first installation body (11) in the rear end position.

8. The fitting as claimed in any of the preceding claims, **characterized in that** the second fitting part (30; 130) has, along the slotted opening (35; 135), an obliquely rearward-extending tightening contour (38; 138) for the respective undercut (14; 114) of the at least two front slider ends (15; 115) in order to pull the first and the second fitting part (10, 30; 110, 130) into mutual contact.

9. The fitting as claimed in any of the preceding claims, **characterized in that** the first installation body (11; 111) is formed from two housing halves (21; 121), in particular of identical construction, which each have on the inside a guide recess (22; 122) for the slider (12; 112).

10. The fitting as claimed in claim 9, **characterized in that** at least one of the two housing halves (21), in particular both housing halves (21), has/have a respective bearing opening (23), in which the gear (19) is rotatably mounted.

11. The fitting as claimed in any of the preceding claims, **characterized in that** the first installation body (11; 111) has external projections (26; 126) and/or external transverse ribs (27; 127) and/or that the second installation body (31; 131) has external transverse ribs (37; 137).

12. An assembly, in particular a furniture assembly, comprising two parts (2, 3) and a fitting (1; 101) as claimed in any of the preceding claims, wherein the first fitting part (10; 110) is mounted on the one, first part (2), and the second fitting part (30; 130) is mounted on the other, second part (3), and wherein the at least two front slider ends (15; 115) are inserted into the corresponding keyholes (33; 133) and engage by means of their undercuts (14; 114) behind the slotted openings (35; 135) in the insertion direction (17a; 117a).

13. The assembly as claimed in claim 12, **characterized in that** the first fitting part (10; 110) engages by means of its first installation body (11; 111) in a recess (4) of the first part (2), and the second fitting part (30; 130) is mounted by means of its second installation body (31; 131) in a recess (5) of the second part (3).

14. The assembly as claimed in claim 12 or 13, **characterized in that** the front side (16; 116) of the first installation body (11; 111) ends flush with the first part (2), and the front side (32; 132) of the second installation body (31; 131) ends flush with the second part (3).

15. The assembly as claimed in any of claims 12 to 14, **characterized in that** the front side (16; 116) of the first installation body (11; 111) and the front side (32; 132) of the second installation body (31; 131) rest against one another.

## Revendications

1. Ferrure (1 ; 101), en particulier ferrure d'étagère, pour relier deux pièces (2, 3), en particulier deux pièces de meuble, comprenant
- un premier élément de ferrure (10 ; 110) avec un premier corps de montage (11 ;111) pour le montage sur une première pièce (2) à relier et avec un coulisseau (12 ; 112) guidé de manière déplaçable dans le premier corps de montage (11 ; 111),qui, à partir d'une position de départ avant, dans laquelle au moins une extrémité de coulisseau avant (15 ; 115) présentant une contre-dépouille (14 ; 114) fait saillie vers l'avant hors du premier corps de montage (11 ; 111),est déplaçable vers l'arrière, contre l'action d'une force de rappel, jusqu'à une position finale arrière, dans laquelle l'extrémité de coulisseau avant (15 ; 115) ne fait pas saillie hors du premier corps de montage (11 ; 111), et
- un second élément de ferrure (30 ; 130) sous la forme d'un second corps de montage (31 ; 131) pour le montage sur une seconde pièce (3) à relier, le second corps de montage (31 ; 131) présentant un trou en forme de serrure (33 ; 133) avec une ouverture d'introduction (34 ; 134) pour l'introduction de l'extrémité de coulisseau avant (15 ; 115) et avec une ouverture en fente (35 ; 135), qui fait suite à l'ouverture d'introduction (34 ; 134) et qui est rétrécie par rapport à l'ouverture d'introduction (34 ; 134), pour l'engagement de la contre-dépouille (14 ; 114) de l'extrémité de coulisseau avant (15 ; 115),
le coulisseau (12) présentant une crémaillère (18) s'étendant dans la direction de déplacement (17) du coulisseau (12) et une roue dentée (19) étant montée de manière rotative dans le premier corps de montage (11), laquelle engrène avec la crémaillère (18) et peut être tournée manuellement de l'extérieur afin de déplacer le coulisseau (12) contre l'action de la force de rappel dans la position finale arrière,
ou
la face avant (132) du second corps de montage (131), du côté opposé à l'ouverture en fente (135) du trou en forme de serrure (133), présentant une ouverture supplémentaire (139) débouchant dans l'ouverture d'introduction (134) avec un fond d'ouverture incliné (140), dont la profondeur (T) par rapport à la face avant (132), vue dans la direction s'éloignant de l'ouverture d'introduction (134), diminue continuellement jusqu'au niveau de la face avant (132), afin de déplacer le coulisseau (112) contre l'action de la force de rappel dans la position finale arrière,
**caractérisé en ce que**
le coulisseau (12 ; 112) présente au moins deux extrémités de coulisseau avant (15 ; 115) parallèles, chacune présentant une contre-dépouille (14 ; 114), qui coopèrent avec des trous en forme de serrure (33 ; 133) correspondants du second élément de ferrure (30 ; 130).

2. Ferrure selon la revendication 1, **caractérisée en ce que** la roue dentée (19) est disposée dans une ouverture (20) du coulisseau (12), en particulier rectangulaire, dont une paroi latérale présente la crémaillère (18).

3. Ferrure selon la revendication 1 ou 2, **caractérisée en ce que** le premier corps de montage (11) présente une ouverture d'accès (23) pour tourner la roue dentée (19).

4. Ferrure selon la revendication 1, **caractérisée en ce que** la profondeur (To) du fond d'ouverture incliné (140) à l'ouverture d'introduction (134) correspond au moins à la somme de la distance (a) de la face frontale à la contre-dépouille (114) respective des au moins deux extrémités de coulisseau avant (115) et de l'épaisseur (d) de la paroi d'ouverture (141) définissant l'ouverture en fente (135) du second corps de montage (131).

5. Ferrure selon l'une des revendications précédentes, **caractérisée en ce que** la force de rappel est assurée par un ressort, en particulier un ressort de compression (13 ; 113), qui est supporté à la fois sur le premier corps de montage (11 ; 111) et sur le coulisseau (12 ; 112).

6. Ferrure selon l'une des revendications précédentes, **caractérisée en ce que** les au moins deux extrémités de coulisseau avant (15 ; 115) sont réalisées en forme de tige.

7. Ferrure selon l'une des revendications précédentes, **caractérisée en ce que** le coulisseau (12) est enclenché avec le premier corps de montage (11) en position finale arrière.

8. Ferrure selon l'une des revendications précédentes, **caractérisée en ce que** le second élément de ferrure (30 ; 130) présente, le long de l'ouverture en fente (35 ; 135), un contour d'entraînement (38 ; 138) s'étendant obliquement vers l'arrière pour la contre-dépouille (14 ; 114) respective des au moins deux extrémités de coulisseau avant (15 ; 115), afin d'amener le premier et le second élément de ferrure (10, 30 ; 110, 130) en contact l'un avec l'autre.

9. Ferrure selon l'une des revendications précédentes, **caractérisée en ce que** le premier corps de montage (11 ; 111) est formé de deux demi-boîtiers (21 ; 121), en particulier de construction identique, qui présentent chacun, du côté intérieur, un évidement de guidage (22 ; 122) pour le coulisseau (12 ; 112).

10. Ferrure selon la revendication 9, **caractérisée en ce qu'**au moins un des deux demi-boîtiers (21), en particulier les deux demi-boîtiers (21), présente respectivement une ouverture de palier (23) dans laquelle la roue dentée (19) est montée de manière rotative.

11. Ferrure selon l'une des revendications précédentes, **caractérisée en ce que** le premier corps de montage (11 ; 111) présente des saillies (26 ; 126) extérieures et/ou des nervures transversales (27 ; 127) extérieures et/ou **en ce que** le second corps de montage (31 ; 131) présente des nervures transversales (37 ; 137) extérieures.

12. Agencement, en particulier agencement de meuble, avec deux pièces (2, 3) et avec une ferrure (1 ; 101) selon l'une des revendications précédentes, le premier élément de ferrure (10 ; 110) étant monté sur l'une, première pièce (2) et le second élément de ferrure (30 ; 130) étant monté sur l'autre, seconde pièce (3), et les au moins deux extrémités de coulisseau avant (15 ; 115) étant introduites dans les trous en forme de serrure (33 ; 133) correspondants et, avec leurs contre-dépouilles (14 ; 114), engageant les ouvertures en fente (35 ; 135) dans la direction d'introduction (17a ; 117a).

13. Agencement selon la revendication 12, **caractérisé en ce que** le premier élément de ferrure (10 ; 110) avec son premier corps de montage (11 ; 111) est monté dans un évidement (4) de la première pièce (2) et le second élément de ferrure (30 ; 130) avec son second corps de montage (31 ; 131) est monté dans un évidement (5) de la seconde pièce (3).

14. Agencement selon la revendication 12 ou 13, **caractérisé en ce que** la face avant (16 ; 116) du premier corps de montage (11 ; 111) affleure avec la première pièce (2) et la face avant (32 ; 132) du second corps de montage (31 ; 131) affleure avec la seconde pièce (3).

15. Agencement selon l'une des revendications 12 à 14, **caractérisé en ce que** la face avant (16 ; 116) du premier corps de montage (11 ; 111) et la face avant (32 ; 132) du second corps de montage (31 ; 131) sont en contact l'un avec l'autre.
